# EUROPEAN PATENT SPECIFICATION

(11) **EP 4 580 025 B1**
(45) Date of publication and mention of the grant of the patent: **09.09.2026**
(21) Application number: 23882279.5
(22) Date of filing: 15.09.2023
(51) Int. Cl.: H02M 1/00, H02M 1/15, H02M 3/00, H02M 3/335, H02M 1/42, H02M 7/04

(54) **DC/DC CONVERTER AND POWER SOURCE DEVICE**
GLEICHSTROMWANDLER UND STROMQUELLENVORRICHTUNG
CONVERTISSEUR CC/CC ET DISPOSITIF DE SOURCE D'ALIMENTATION

(30) Priority: 24.10.2022 JP 2022169895
(43) Date of publication of application: 02.07.2025
(73) Proprietor: Nichicon Corporation, Kyoto-shi, Kyoto 604-0845 (JP)
(72) Inventor: SASAKI Mikio, Kyoto-shi, Kyoto 604-0845 (JP); YAMAGUCHI, Masashi, Kyoto-shi, Kyoto 604-0845 (JP)
(74) Representative: Abitz & Partner
(86) International application number: PCT/JP2023/033707
(87) International publication number: WO 2024/090066

(56) References cited:
- JP-A- 2001 037 215
- JP-A- 2005 006 455
- JP-A- 2020 173 913
- JP-A- 2021 013 233
- US-A1- 2006 126 367
- US-A1- 2022 085 643
- US-B1- 9 450 492

## Description

### TECHNICAL FIELD

The present invention relates to a DC/DC converter and a power source device.

### BACKGROUND ART

In recent years, as the battery capacity of electric vehicles increases, the charge capacity of quick chargers for electric vehicles having a large capacity such as 200 [kW] is increasing from conventional several 10 [kW]. Thus, it is more important to reduce the size, increase the efficiency, and reduce the cost of the power source device used in the quick charger.

The power source device of a quick charger includes a power supply unit including an AC/DC converter and a DC/DC converter. Conventionally, a voltage current type DC/DC converter has been used as the DC/DC converter, but in recent years, a current resonant type DC/DC converter of an LLC method, a CLLC method, or the like is capable of being reduced in size, having high efficiency, and having low cost by improving control techniques is used in view of the background. The current resonant type DC/DC converter needs to be controlled by changing a driving frequency over a wide range by input voltage, output voltage, and output current.

The CHAdeMO standard, which is a charging standard for electric vehicles, defines ripple noise of a quick charger as, for example, equal to or less than 10 [Hz]/less than 1.5 [App] and equal to or less than 5 [Hz]/less than 3 [App]. In the case of the current resonant type DC/DC converter, ripple noise (input voltage ripple) included in the input voltage is propagated from a primary-side switching circuit to a secondary-side rectifier circuit via a high-frequency isolation transformer, and is output as ripple noise (output current ripple) included in the output current. The output current ripple adversely affects the battery of the electric vehicle, and thus, in general, a power line noise filter circuit (hereinafter, the filter circuit) is provided between the DC/DC converter and the preceding AC/DC converter (or in the AC/DC converter) to reduce the output current ripple by reducing the input voltage ripple.

In order to reduce the size and cost of the filter circuit, it is necessary to increase the cutoff frequency of the filter circuit. However, when the cutoff frequency of the filter circuit is increased, a low frequency component of ripple noise flows out from the filter circuit. When an AC power supply connected to the AC end side of the AC/DC converter is a three-phase AC of 50 [Hz] or 60 [Hz], for example, a harmonic current (AC ripple) of 300 [Hz] or 360 [Hz], which is the sixth harmonic of the AC current input from the AC power supply, flows out of the filter circuit. When the AC power supply is a single-phase AC of 50 [Hz] or 60 [Hz], for example, a lower-order harmonic current (AC ripple) of 100 [Hz] or 120 [Hz], which is a second-order low harmonic of the AC current input from the AC power supply, flows out of the filter circuit.

On the other hand, when the cutoff frequency of the filter circuit is lowered, a low frequency component of ripple noise can be reduced, but this leads to an increase in size of the choke coil and an increase in capacity of the electrolytic capacitor that constituting the filter circuit. As a result, the filter circuit and the power source device are increased in size and cost. Specifically, in the case of a single-phase AC power supply, when it is intended to cope with a second-order low AC ripple, it is necessary to set a lower cutoff frequency, which leads to an increase in size of the filter circuit.

Accordingly, in the current resonant type DC/DC converter described in Patent Document 1, the control unit is provided with an input voltage ripple extraction unit that extracts an input voltage ripple and a gain generation unit that generates a gain so that the output current ripple becomes equal to or less than a certain value. The current resonant type DC/DC converter described in Patent Document 1 performs feedforward control by the input voltage ripple multiplied by the gain, and thus the output current ripple can be reduced even if the cutoff frequency of the filter circuit is increased.

Further, the LLC converter described in Patent Document 2 reduces the output current ripple by adjusting the driving frequency on the basis of a feedforward signal generated by the difference between the input voltage and the average input voltage and the feedback signal of the output current.

US 2022/085643 A1 discloses a charging system including an AC-DC converter, a DC-link, a DC-DC converter, a control input, an output, a drive circuitry and a controller.

US 2006/126367 A1 relates to switch mode power supplies.

US 9 450 492 B1 relates to method for controlling a switched-mode power supply (SMPS).

### PRIOR ART DOCUMENTS

### PATENT DOCUMENTS

Patent Document 1: Japanese Patent Application No. 2021-172421 published with the publication number JP 2023062437 A
Patent Document 2: CN-B-113346774

### SUMMARY OF THE INVENTION

### PROBLEMS TO BE SOLVED BY THE INVENTION

In the current resonant type DC/DC converter described in Patent Document 1, in a case where the feedforward control is overcontrolled, the overcontrol cannot be detected and suppressed, and thus there arises a problem that the output current ripple cannot be reduced. Specifically, in the quick charger, the battery voltage of the electric vehicle greatly changes from 150 [V] to 450 [V], and thus may be controlled by changing the input voltage of the current resonant type DC/DC converter, and a regulation value of the current ripple also changes depending on the current value, resulting in overcontrol depending on the operation state and causing the above-described problem. Even in the LLC converter described in Patent Document 2, when the correction gain of the feedforward control is increased, the feedforward control is overcontrolled, and in that case, a problem similar to that of the current resonant type DC/DC converter described in Patent Document 1 occurs.

The present invention has been made in view of the above circumstances, and an object thereof is to provide a DC/DC converter and a power source device capable of reducing an output ripple even when overcontrol occurs.

### MEANS FOR SOLVING THE PROBLEMS

In order to solve the problems, a DC/DC converter according to claim 1 is provided.

In this configuration, since the second control unit generates the gain on the basis of the output ripple with polarity, the polarity of the gain is reversed between a case of overcontrol and a case of non-overcontrol (case of normal control). Since the switching control unit performs feedforward control of the drive circuit on the basis of the second control command value obtained by multiplying the input voltage ripple by the gain, overcontrol is suppressed, and the output ripple can be reduced. Further, in this configuration, it is possible to perform control processing similar to that at the time of normal control to suppress overcontrol.

The DC/DC converter can be configured in such a manner that
the second control unit includes a polarity determination unit, and
the polarity determination unit outputs a value of +1 when the input voltage ripple is positive and outputs a value of -1 when the input voltage ripple is negative as the value including the polarity.

The DC/DC converter can be configured in such a manner that
the second control unit includes a gain-added polarity determination unit, and
the gain-added polarity determination unit outputs the input voltage ripple subjected to gain adjustment as the value including the polarity.

The DC/DC converter can be configured in such a manner that
the second control unit includes:
a first multiplier that calculates the output ripple with polarity;
a calculation unit that calculates a difference between the output ripple with polarity and the ripple target value;
a PI control unit that generates the gain on a basis of the difference; and
a second multiplier that multiplies the input voltage ripple by the gain.

The DC/DC converter can be configured in such a manner that
the PI control unit changes a magnitude of a PI gain according to the input voltage.

The DC/DC converter can be configured in such a manner that
the output ripple extraction unit extracts an output current ripple or an output voltage ripple included in the output as the output ripple.

The DC/DC converter can be configured in such a manner that
the input voltage ripple extraction unit extracts the input voltage ripples of an N number of frequencies (N is an integer equal to or more than 2),
the output ripple extraction unit extracts the output ripples of the N number of frequencies,
the second control unit generates the N number of the second control command values on a basis of the input voltage ripples of the N number of frequencies and the output ripples of the N number of frequencies, and
the switching control unit performs feedforward control on the drive circuit on a basis of the first control command value and the N number of the second control command values.

In order to solve the problems, a power source device according to the present invention includes:
an AC/DC converter; and
any one of the DC/DC converters described above connected to a DC end of the AC/DC converter.

In the power source device, preferably,
an output voltage of the AC/DC converter is changed according to an output voltage of the DC/DC converter.

### EFFECT OF THE INVENTION

According to the present invention, it is possible to provide a DC/DC converter and a power source device capable of reducing an output ripple even when overcontrol occurs.

### BRIEF DESCRIPTION OF THE DRAWINGS

Fig. 1 is a block diagram illustrating an example of a DC/DC converter and a power source device according to a first embodiment of the present invention.
Fig. 2 is a diagram illustrating an example (in a case of normal control) of a waveform of each unit in a control unit of the DC/DC converter according to the first embodiment of the present invention.
Fig. 3 is a diagram illustrating an example (in a case of overcontrol) of a waveform of each unit in a control unit of the DC/DC converter according to the first embodiment of the present invention.
Fig. 4 is a block diagram illustrating an example of a DC/DC converter and a power source device according to a second embodiment of the present invention.
Fig. 5 is a block diagram illustrating an example of a control unit of the DC/DC converter according to the second embodiment of the present invention.

### MODE FOR CARRYING OUT THE INVENTION

Hereinafter, embodiments of a DC/DC converter and a power source device according to the present invention will be described with reference to the accompanying drawings.

### [First embodiment]

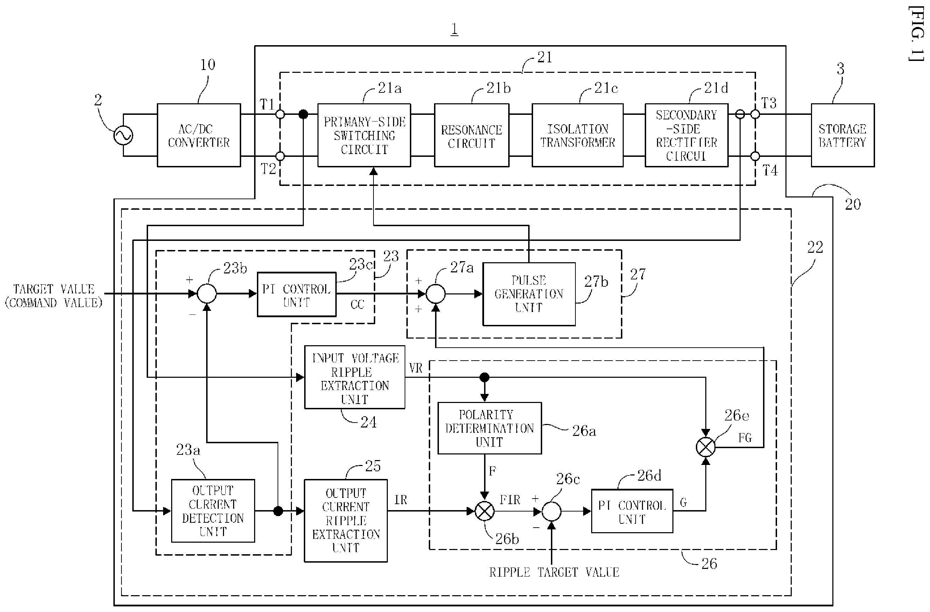

Fig. 1 illustrates a power source device 1 according to a first embodiment of the present invention. The power source device 1 includes an AC/DC converter 10 and a current resonant type DC/DC converter 20 (a power unit 21 and a control unit 22) according to the first embodiment of the present invention.

The AC/DC converter 10 includes an AC end and a DC end, the AC end is connected to the AC power supply 2 (for example, a three-phase AC output commercial power supply), and the DC end is connected to the power unit 21 of the DC/DC converter 20. Further, the AC/DC converter 10 includes a power conversion unit including at least one switching element, a control unit that controls the power conversion unit, and a power line noise filter circuit (hereinafter, the filter circuit). The AC/DC converter 10 converts AC power input from the AC power supply 2 into DC power by an AC/DC conversion operation of the power conversion unit, and outputs the DC power to the power unit 21 of the DC/DC converter 20 via a filter circuit. The control unit controls the output voltage by, for example, constant voltage control. The power conversion unit may have a power factor correction (PFC) function.

The filter circuit of the AC/DC converter 10 is, for example, an LC filter circuit including a choke coil and a capacitor (an electrolytic capacitor or a film capacitor). In the filter circuit of the present embodiment, the cutoff frequency is set to a relatively high value in order to reduce the size and cost of the filter circuit. Thus, the filter circuit blocks most of switching noise and switching ripple generated in synchronization with the switching frequency of the switching element of the AC/DC converter 10. On the other hand, in this filter circuit, the AC ripple generated in synchronization with the frequency (50 [Hz] or 60 [Hz]) of the AC power supply 2 passes through. Thus, a constant voltage output of the AC/DC converter 10, that is, an input voltage of the DC/DC converter 20 includes an input voltage ripple generated in synchronization with the frequency of the AC power supply 2. Note that a part of the filter circuit may be provided between the AC/DC converter 10 and the DC/DC converter 20 or at an input unit of the DC/DC converter 20.

The power unit 21 of the DC/DC converter 20 includes terminals T1 to T4, the terminals T1 and T2 are connected to the AC/DC converter 10, and the terminals T3 and T4 are connected to the storage battery 3 (for example, a lithium-ion battery of an electric vehicle) as a load. Further, the power unit 21 includes a primary-side switching circuit 21a, a resonance circuit 21b, an isolation transformer 21c, and a secondary-side rectifier circuit 21d. The power unit 21 generates a desired direct current (charging current) on the basis of a direct current input voltage input from the AC/DC converter 10, and supplies the direct current to the storage battery 3. Note that the load is not limited to the storage battery 3.

The primary-side switching circuit 21a is a drive circuit including at least one switching element, and is, for example, a full bridge circuit, a three-phase bridge circuit, or a half bridge circuit. As the switching element, for example, a power semiconductor such as an insulated gate bipolar transistor (IGBT) or a metal oxide semiconductor field effect transistor (MOSFET) can be used. A diode (including a built-in diode) may be connected in parallel in the reverse direction, and a capacitor (including a parasitic capacitance) may be connected in parallel to the current path of the switching element.

The resonance circuit 21b is an LC resonance circuit including a resonance coil (inductance) and a resonance capacitor (capacitance). The resonance circuit 21b constitutes an LLC resonance circuit together with an excitation coil (inductance) and a primary-side coil of the isolation transformer 21c. Note that the resonance coil may include only a leakage inductance due to leakage magnetic flux of the isolation transformer 21c, or may include a leakage inductance due to leakage magnetic flux of the isolation transformer 21c and an individual coil.

The isolation transformer 21c is a high-frequency isolation transformer including a primary-side coil (primary winding) and a secondary-side coil (secondary winding). The primary-side coil is connected to the primary-side switching circuit 21a via the resonance circuit 21b, and the secondary-side coil is connected to the secondary-side rectifier circuit 21d. The isolation transformer 21c includes one or a plurality of high-frequency isolation transformers.

The secondary-side rectifier circuit 21d includes a diode rectifier circuit including a plurality of diodes or a synchronous rectifier circuit including a plurality of switching elements including a plurality of power semiconductors, and a smoothing circuit including a capacitor.

The control unit 22 of the DC/DC converter 20 includes a first control unit 23, an input voltage ripple extraction unit 24, an output current ripple extraction unit 25, a second control unit 26, and a switching control unit 27. Each of the units 23 to 27 of the control unit 22 may include an analog circuit, a digital circuit including a microcontroller, a DSP, or the like, or a circuit combining an analog circuit and a digital circuit. Furthermore, the control unit 22 may also serve as a control unit of the AC/DC converter 10.

Note that various signals are input and output between the units 23 to 27 of the control unit 22, but in the following description, the term "signal" is omitted from the signal names of the various signals. For example, a "signal related to a current value" is simply expressed as a "current value", and a "difference signal" is simply expressed as a "difference". The same applies to the second embodiment described later.

The first control unit 23 includes an output current detection unit 23a, a calculation unit 23b, and a PI control unit 23c. The output current detection unit 23a detects an output current of the DC/DC converter 20 output from the secondary-side rectifier circuit 21d, and outputs a current value of the output current to the calculation unit 23b. The calculation unit 23b calculates a difference between the current value of the output current and a target value (command value) of an output current input from an external device, and outputs the difference to the PI control unit 23c. The PI control unit 23c performs proportional integral (PI) calculation based on the difference, and generates a first control command value CC for causing the current value of the output current to approach the target value.

The input voltage ripple extraction unit 24 detects an input voltage of the DC/DC converter 20 input to the primary-side switching circuit 21a, and extracts ripple noise (hereinafter, an input voltage ripple) included in the input voltage. The input voltage ripple includes switching noise, switching ripple, and AC ripple as described above. The input voltage ripple extraction unit 24 includes a filter for extracting the input voltage ripple, for example, a band pass filter (BPF) obtained by combining a low pass filter (LPF) and a high pass filter (HPF). The input voltage ripple extraction unit 24 outputs the voltage value (hereinafter, a ripple voltage value VR) of the extracted input voltage ripple to the second control unit 26.

The output current ripple extraction unit 25 extracts ripple noise (hereinafter, an output current ripple) included in the output current detected by the output current detection unit 23a. Similarly to the input voltage ripple extraction unit 24, the output current ripple extraction unit 25 includes, for example, a band pass filter (BPF) obtained by combining a low pass filter (LPF) and a high pass filter (HPF). The output current ripple extraction unit 25 outputs a current value of the extracted output current ripple (hereinafter, a ripple current value IR) to the second control unit 26.

The second control unit 26 includes a polarity determination unit 26a, a first multiplier 26b, a calculation unit 26c, a PI control unit 26d, and a second multiplier 26e.

The polarity determination unit 26a determines the polarity of the ripple voltage value VR and outputs a sign F of the polarity. The sign F has a positive (in the present embodiment, +1) or negative (in the present embodiment, -1) value. That is, the polarity determination unit 26a outputs the sign F having a value of +1 when the ripple voltage value VR is positive, and outputs the sign F having a value of -1 when the ripple voltage value VR is negative.

The first multiplier 26b calculates a ripple current value with polarity FIR by multiplying the ripple current value IR input from the output current ripple extraction unit 25 by the sign F input from the polarity determination unit 26a. The first multiplier 26b outputs a ripple current value with polarity FIR, which is a product of the ripple current value IR and the sign F, to the calculation unit 26c.

The calculation unit 26c calculates a difference between the ripple current value with polarity FIR input from the first multiplier 26b and a ripple target value set in advance, and outputs the difference to the PI control unit 26d. The ripple target value is a target value of a peak-to-peak current value of the output current ripple, and is set to 0 [App] in the present embodiment.

The PI control unit 26d performs proportional integral (PI) calculation based on the difference between the ripple current value with polarity FIR and the ripple target value, and generates a gain G for causing the ripple current value with polarity FIR to approach the target value. The PI control unit 26d also functions as a smoothing filter for rectification.

The second multiplier 26e multiplies the ripple voltage value VR input from the input voltage ripple extraction unit 24 by the gain G input from the PI control unit 26d to generate a second control command value FG that is a product of the ripple voltage value VR and the gain G.

The switching control unit 27 includes a calculation unit 27a and a pulse generation unit 27b. The switching control unit 27 performs feedforward control on the first control command value CC for bringing the output current value close to the target value using the second control command value FG that is the product of the ripple voltage value VR and the gain G. Specifically, the calculation unit 27a adds the first control command value CC input from the PI control unit 23c and the second control command value FG input from the second multiplier 26e, and outputs the addition value to the pulse generation unit 27b. The pulse generation unit 27b determines the driving frequency of the switching element of the primary-side switching circuit 21a on the basis of the addition value of the first control command value CC and the second control command value FG, and generates a switching pulse for turning on/off the switching element at the driving frequency.

That is, the pulse generation unit 27b performs frequency modulation control on the primary-side switching circuit 21a. When the switching element of the primary-side switching circuit 21a is turned on/off according to the frequency modulation control, a resonance current flows to the primary-side coil of the isolation transformer 21c via the resonance circuit 21b. Note that, at the time of low output, the pulse generation unit 27b may perform control such as burst (intermittent) control or phase shift control on the primary-side switching circuit 21a. When the secondary-side rectifier circuit 21d includes a synchronous rectifier circuit, the pulse generation unit 27b acquires information necessary for synchronous rectification control from the power unit 21, generates a switching pulse for turning on/off the switching element of the secondary-side rectifier circuit 21d in synchronization with the resonance current, and performs the synchronous rectification control of the secondary-side rectifier circuit 21d. In addition, at the time of high output, the pulse generation unit 27b may short-circuit the secondary-side rectifier circuit 21d by turning on some switching elements of the secondary-side rectifier circuit 21d in synchronization with the primary-side switching circuit 21a, and perform boost control.

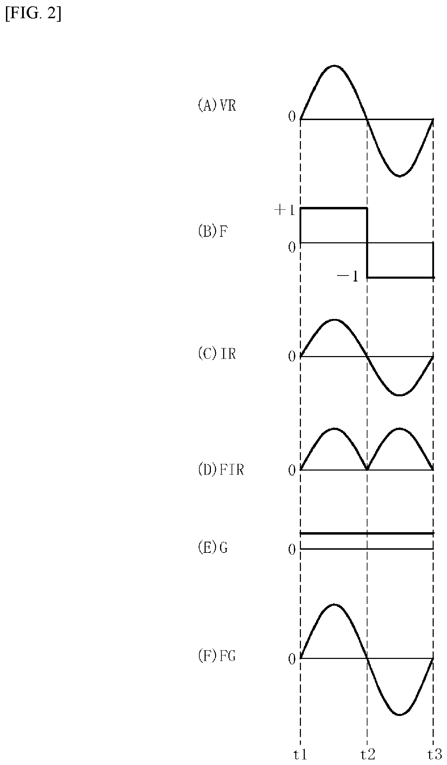

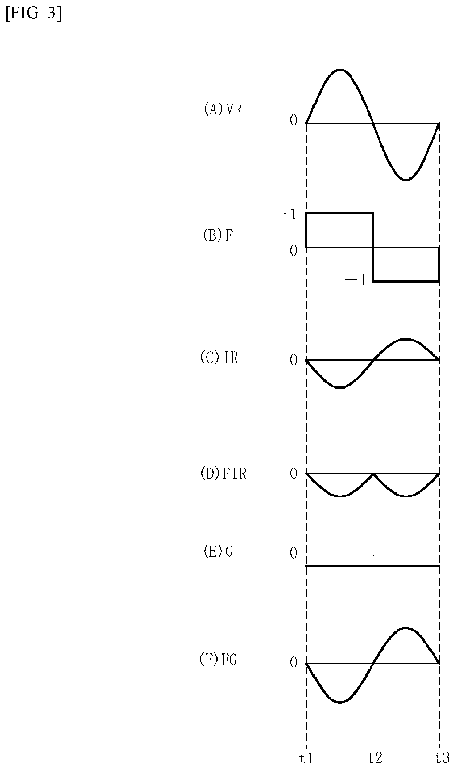

Next, the operation of the DC/DC converter 20 will be described in more detail with reference to Figs. 2 and 3. Fig. 2 is a diagram illustrating an example of waveforms of each unit in the control unit 22 at the time of normal control in which the feedforward control is not overcontrolled. Fig. 3 is a diagram illustrating an example of waveforms of each unit in the control unit 22 at the time of overcontrol in which the feedforward control is overcontrolled. In the following description, the input voltage ripple is a sine wave in order to simplify the description, but the input voltage ripple may have an irregular waveform other than the sine wave, and in this case, the operation also corresponds to the irregular waveform.

In the case of the normal control, from time t1 to time t3 in Fig. 2, the ripple voltage value VR of the input voltage ripple extracted by the input voltage ripple extraction unit 24 is an instantaneous value of a sine wave for one cycle from 0° to 360° (Fig. 2(A)). The sign F of the polarity determination unit 26a is a value of +1 from time t1 to time t2 because the ripple voltage value VR is positive, and is a value of -1 from time t2 to time t3 because the ripple voltage value VR is negative (Fig. 2(B)).

Since the output current ripple due to the input voltage ripple occurs in the DC/DC converter 20, from time t1 to time t3, the ripple current value IR of the output current ripple extracted by the output current ripple extraction unit 25 becomes an instantaneous value of a sine wave for one cycle from 0° to 360°, similarly to the ripple voltage value VR (Fig. 2(C)).

The ripple current value with polarity FIR has a positive waveform from time t1 to time t2 since the sign F is +1 and the ripple current value IR is positive, and has a positive waveform from time t2 to time t3 since the sign F is -1 and the ripple current value IR is negative (Fig. 2(D)). Furthermore, since the ripple target value is 0 in the present embodiment, the ripple current value with polarity FIR is input as a positive waveform as it is to the PI control unit 26d.

The PI control unit 26d obtains a positive gain G obtained by smoothing the ripple current value with polarity FIR having a positive waveform from time t1 to time t3 (Fig. 2(E)). As a result, the second control command value FG, which is the product of the ripple voltage value VR and the gain G, has a waveform having the same polarity as the ripple voltage value VR (Fig. 2(F)).

Thus, in the case of normal control, the control unit 22 performs the feedforward control based on the second control command value FG together with the feedback control based on the first control command value CC, and thereby can perform output current ripple correction and reduce the output current ripple.

In the case of overcontrol in which the feedforward control is overcontrolled, from time t1 to time t3 in Fig. 3, the ripple voltage value VR and the sign F have waveforms similar to those in the normal control (Figs. 3(A) and 3(B)). On the other hand, the ripple current value IR of the output current ripple has a waveform with a polarity opposite to that of the ripple voltage value VR due to the excessive feedforward control amount due to the overcontrol (Fig. 3(C)). That is, the ripple current value IR has a negative waveform when the ripple voltage value VR from time t1 to time t2 is positive, and has a positive waveform when the ripple voltage value VR from time t2 to time t3 is negative.

As a result, the ripple current value with polarity FIR at the time of overcontrol has a negative waveform from time t1 to time t2 because the sign F is +1 and the ripple current value IR is negative, and likewise has a negative waveform from time t2 to time t3 since the sign F is -1 and the ripple current value IR is positive (Fig. 3(D)). The ripple current value with polarity FIR is input as a negative waveform to the PI control unit 26d.

The PI control unit 26d obtains a negative gain G obtained by smoothing the ripple current value with polarity FIR having a negative waveform from time t1 to time t3 (Fig. 3(E)). As described above, since the gain G at the time of overcontrol has a polarity opposite to that of the gain G at the time of normal control and has a negative value, the second control command value FG, which is a product of the ripple voltage value VR and the gain G, has a waveform having a polarity opposite to that of the ripple voltage value VR (Fig. 3(F)). That is, the second control command value FG has a negative waveform from time t1 to time t2 and a positive waveform from time t2 to time t3.

Thus, even at the time of overcontrol, the control unit 22 performs the feedforward control based on the second control command value FG together with the feedback control based on the first control command value CC, and thereby can suppress the overcontrol of the feedforward control and reduce the output current ripple.

As described above, the DC/DC converter 20 can suppress the overcontrol of the feedforward control by performing the control processing similar to that at the time of the normal control even at the time of the overcontrol, so that a special configuration for detecting the overcontrol is unnecessary, and a special control processing for suppressing the overcontrol is also unnecessary. Furthermore, the DC/DC converter 20 can stably perform control even when the correction gain by feedforward (PI gain of the PI control unit 26d) is increased, and can appropriately reduce the output current ripple due to the input voltage ripple. In addition, according to the present control method, even in a case where the input voltage ripple waveform and the output current ripple waveform are out of phase, the same control as in the overcontrol can be performed, so that the control can be stably performed without the overcontrol due to the phase shift.

Note that the power source device 1 may change the input voltage of the DC/DC converter 20 (the output voltage of the AC/DC converter 10) according to the output voltage of DC/DC converter 20. Preferably, the input voltage is decreased when the output voltage of the DC/DC converter 20 is small, and the input voltage is increased when the output voltage of the DC/DC converter 20 is large.

When the input voltage is increased, the output current ripple due to the input voltage ripple is also increased, and thus it is preferable that the correction gain by feedforward (PI gain of the PI control unit 26d) is large. On the other hand, when the input voltage is decreased, the output current ripple due to the input voltage ripple is also decreased, and thus, when the correction gain is large, the possibility that the feedforward control is overcontrolled is increased. Accordingly, the DC/DC converter 20 preferably changes the correction gain according to the input voltage. For example, the DC/DC converter 20 may change the magnitude of the correction gain so that the correction gain increases when the input voltage is large and the correction gain decreases when the input voltage is small.

### [Second embodiment]

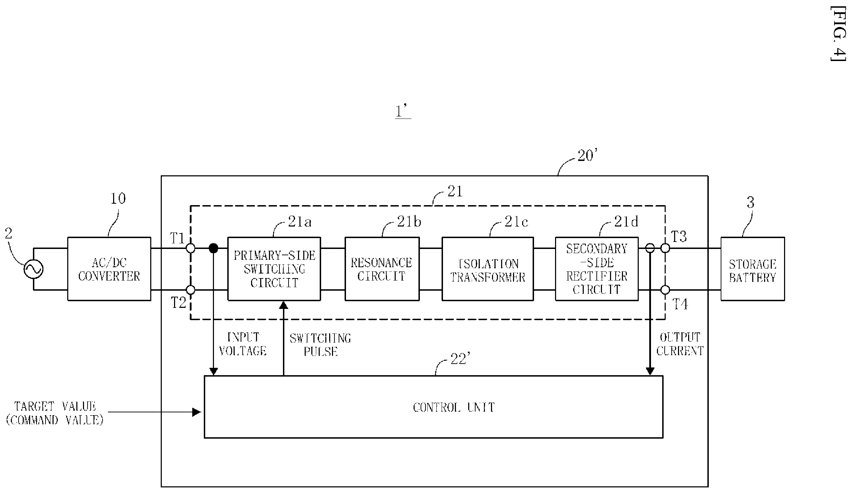

Fig. 4 illustrates a power source device 1' according to a second embodiment of the present invention. As illustrated in Fig. 4, the power source device 1' includes an AC/DC converter 10 and a current resonant type DC/DC converter 20' according to the second embodiment of the present invention. The power source device 1' has the same configuration as the power source device 1 (Fig. 1) of the first embodiment except for a DC/DC converter 20'.

The DC/DC converter 20' includes a power unit 21 and a control unit 22'. The DC/DC converter 20' has the same configuration as the DC/DC converter 20 (Fig. 1) of the first embodiment except for the control unit 22'.

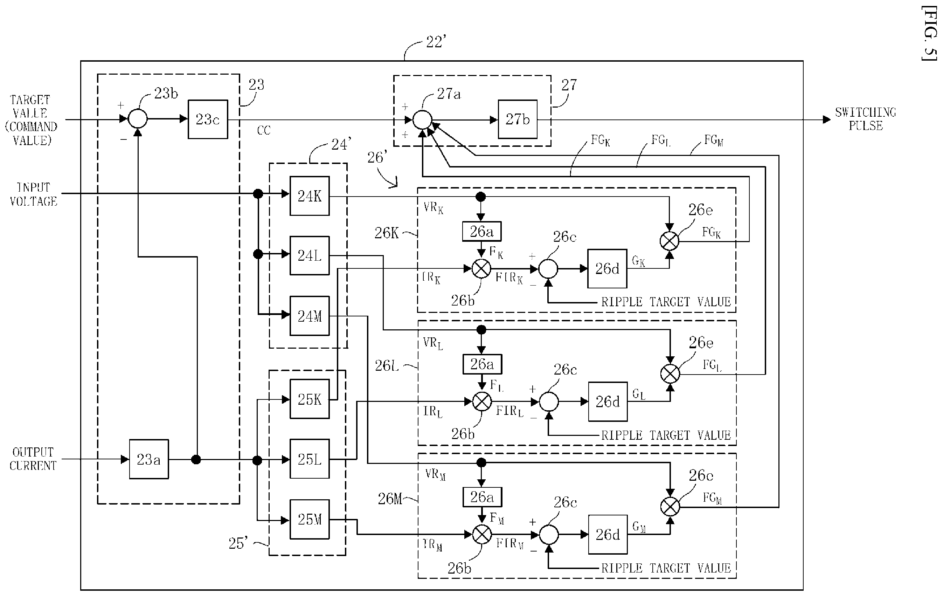

As illustrated in Fig. 5, the control unit 22' includes a first control unit 23, an input voltage ripple extraction unit 24' (24K, 24L, and 24M), an output current ripple extraction unit 25' (25K, 25L, and 25M), a second control unit 26' (26K, 26L, and 26M), and a switching control unit 27.

In the control unit 22', the first control unit 23 (an output current detection unit 23a, a calculation unit 23b, and a PI control unit 23c) and the switching control unit 27 (the calculation unit 27a and the pulse generation unit 27b) have the same configuration as that of the first embodiment, and the input voltage ripple extraction unit 24' (24K, 24L, and 24M), the output current ripple extraction unit 25' (25K, 25L, and 25M), and the second control unit 26' (26K, 26L, and 26M) have different configurations from those of the first embodiment. Due to this difference in configuration, the control unit 22' corresponds to ripple noise with three different frequencies (in the present embodiment, Kth order, Lth order, and Mth order are used).

The input voltage ripple extraction unit 24K extracts ripple noise (hereinafter, the input voltage ripple) of the Kth order frequency included in the input voltage. The input voltage ripple extraction unit 24K includes a filter for extracting the input voltage ripple, for example, a band pass filter (BPF) obtained by combining a low pass filter (LPF) and a high pass filter (HPF). The input voltage ripple extraction unit 24K outputs a voltage value (ripple voltage value VR_{K}) of the extracted Kth order input voltage ripple to the second control unit 26K.

Similarly, the input voltage ripple extraction unit 24L extracts the input voltage ripple of the Lth order frequency included in the input voltage, and outputs a voltage value (ripple voltage value VR_{L}) of the extracted Lth input voltage ripple to the second control unit 26L. Further, the input voltage ripple extraction unit 24M extracts the input voltage ripple of the Mth order frequency included in the input voltage, and outputs a voltage value (ripple voltage value VR_{M}) of the extracted Mth order input voltage ripple to the second control unit 26M. As described above, the input voltage ripple extraction unit 24' is common to the input voltage ripple extraction unit 24 of the first embodiment except that it corresponds to the Kth, Lth, and Mth order frequencies.

The output current ripple extraction unit 25K extracts ripple noise (hereinafter, the output current ripple) of the Kth order frequency included in the output current detected by the output current detection unit 23a. The output current ripple extraction unit 25K includes, for example, a band pass filter (BPF) obtained by combining a low pass filter (LPF) and a high pass filter (HPF). The output current ripple extraction unit 25K outputs a current value (ripple current value IR_{K}) of the extracted Kth order output current ripple to the second control unit 26K.

Similarly, the output current ripple extraction unit 25L extracts an output current ripple of an Lth order frequency included in the output current detected by the output current detection unit 23a, and outputs a current value (ripple current value IR_{L}) of the extracted Lth output current ripple to the second control unit 26L. Further, the output current ripple extraction unit 25M extracts the output current ripple of the Mth order frequency included in the output current detected by the output current detection unit 23a, and outputs a current value (ripple current value IR_{M}) of the extracted Mth order output current ripple to the second control unit 26M. As described above, the output current ripple extraction unit 25' is common to the output current ripple extraction unit 25 of the first embodiment except that it corresponds to the Kth, Lth, and Mth order frequencies.

Each of the second control units 26K, 26L, and 26M includes a polarity determination unit 26a, a first multiplier 26b, a calculation unit 26c, a PI control unit 26d, and a second multiplier 26e. The second control unit 26' is common to the second control unit 26 of the first embodiment except that it corresponds to the Kth, Lth, and Mth order frequencies. Each of the polarity determination unit 26a, the first multiplier 26b, the calculation unit 26c, the PI control unit 26d, and the second multiplier 26e has the same configuration as that of the first embodiment.

For example, in the second control unit 26K, the polarity determination unit 26a determines the polarity of the ripple voltage value VR_{K} and outputs a sign F_{K} of the polarity. The sign F_{K} has a value of +1 or -1. That is, the polarity determination unit 26a outputs the sign F_{K} having a value of +1 when the ripple voltage value VR_{K} is positive, and outputs the sign F_{K} having a value of -1 when the ripple voltage value VR_{K} is negative.

The first multiplier 26b calculates the ripple current value with polarity FIR_{K} by multiplying the ripple current value IR_{K} input from the output current ripple extraction unit 25K by the sign F_{K} input from the polarity determination unit 26a. The first multiplier 26b outputs the ripple current value with polarity FIR_{K}, which is a product of the ripple current value IR_{K} and the sign F_{K}, to the calculation unit 26c.

The calculation unit 26c calculates a difference between the ripple current value with polarity FIR_{K} input from the first multiplier 26b and a ripple target value set in advance, and outputs the difference to the PI control unit 26d. The ripple target value is a target value of a peak-to-peak current value of the output current ripple, and is set to 0 [App] in the present embodiment.

The PI control unit 26d performs proportional integral (PI) calculation based on the difference between the ripple current value with polarity FIR_{K} and the ripple target value, and generates a gain G_{K} for causing the ripple current value with polarity FIR_{K} to approach the target value. The PI control unit 26d also functions as a smoothing filter for rectification.

The second multiplier 26e multiplies the ripple voltage value VR_{K} input from the input voltage ripple extraction unit 24K by the gain G_{K} input from the PI control unit 26d to generate a second control command value FG_{K} that is a product of the ripple voltage value VR_{K} and the gain G_{K}.

The same applies to the second control units 26L and 26M. That is, the second control unit 26L generates a second control command value FG_{L} from the ripple voltage value VR_{L} input from the input voltage ripple extraction unit 24L and the ripple current value IR_{L} input from the output current ripple extraction unit 25L. Further, the second control unit 26M generates a second control command value FG_{M} from the ripple voltage value VR_{M} input from the input voltage ripple extraction unit 24M and the ripple current value IR_{M} input from the output current ripple extraction unit 25M.

The switching control unit 27 includes a calculation unit 27a and a pulse generation unit 27b. The switching control unit 27 performs feedforward control on the first control command value CC for bringing the output current value close to the target value using a second control command value FGx (x = K, L, or M) that is a product of the ripple voltage value VRx (x = K, L, or M) and the gain Gx (x = K, L, or M). Specifically, the calculation unit 27a adds the first control command value CC input from the PI control unit 23c and the second control command value FGx (x = K, L, or M) input from the second multiplier 26e, and outputs the addition value to the pulse generation unit 27b. The pulse generation unit 27b determines the driving frequency of the switching element of the primary-side switching circuit 21a on the basis of the addition value of the first control command value CC and the second control command value FGx, and generates a switching pulse for turning on/off the switching element at the driving frequency.

In the DC/DC converter 20' according to the present embodiment, the control unit 22' extracts the input voltage ripples of the Kth, Lth, and Mth order frequencies included in the input voltage, generates a current gain (gain Gx (x = K, L, or M)) for making the output current ripples of the Kth, Lth, and Mth order frequencies equal to or less than a predetermined value, and performs feedforward control on the input voltage ripples of the Kth, Lth, and Mth order frequencies by the current gain. Therefore, with the DC/DC converter 20' according to the present embodiment, it is possible to more accurately reduce the output current ripple of the Kth, Lth, and Mth order frequencies.

Although the embodiments of the DC/DC converter and the power source device according to the present invention have been described above, the present invention is not limited to the embodiments.

The configuration of the DC/DC converter according to the present invention can be appropriately changed as long as the DC/DC converter includes a power unit that includes a drive circuit including a switching element and a rectifier circuit, switches an input voltage by the switching element, and rectifies the input voltage by the rectifier circuit to obtain a DC output, and a control unit that controls the drive circuit, in which the control unit includes a first control unit that generates a first control command value for bringing the output close to a target value, an input voltage ripple extraction unit that extracts an input voltage ripple included in the input voltage, an output ripple extraction unit that extracts an output ripple included in the output, a second control unit that calculates an output ripple with polarity by multiplying the output ripple by a value including polarity of the input voltage ripple, generates a gain for bringing the output ripple with polarity close to a ripple target value, and generates a second control command value by multiplying the input voltage ripple by the gain, and a switching control unit that performs feedforward control of the drive circuit on the basis of the first control command value and the second control command value.

For example, in the first embodiment, the second control unit 26 may include a gain-added polarity determination unit instead of the polarity determination unit 26a. The gain-added polarity determination unit performs gain adjustment of the ripple voltage value VR with a gain smaller than 1, and outputs the ripple voltage value VR' after the gain adjustment to the first multiplier 26b. In this case, it is preferable to appropriately change the PI gain of the PI control unit 26d so that the PI control unit 26d can generate the gain G having the same value as that in the embodiment. In addition, the polarity determination unit 26a and the gain-added polarity determination unit may be eliminated, the ripple voltage value VR may be directly input to the first multiplier 26b, and the PI gain may be appropriately changed so that the output (gain G) of the PI control unit 26d falls within an allowable value. The same applies to the second embodiment.

In the second embodiment, the input voltage ripple extraction unit 24' extracts the input voltage ripples of three frequencies (Kth, Lth, and Mth), but the input voltage ripples of the N number of frequencies (N is an integer equal to or more than 2) may be extracted. Similarly, the output current ripple extraction unit 25' extracts output current ripples of three frequencies (Kth, Lth, and Mth), but may extract output current ripples of the N number of frequencies. The control unit 26' may generate the N number of second control command values on the basis of the input voltage ripples of the N number of frequencies and the output current ripples of the N number of frequencies. The switching control unit 27 may perform feedforward control on the primary-side switching circuit 21a (drive circuit) on the basis of the first control command value and the N number of second control command values. That is, the control unit 22' can be configured to cope with ripple noise of the N number of different frequencies.

In the first and second embodiments, the output current ripple has been described, but the same applies to an output voltage ripple and an output power ripple. For example, in a case of the output voltage ripple, the output voltage is detected by an output voltage detection unit instead of the output current detection in the output current detection unit 23a, and the output voltage ripple is extracted by an output voltage ripple extraction unit instead of extraction of the output current ripple in the output current ripple extraction unit 25.

The DC/DC converter according to the present invention may be a current resonant type DC/DC converter of a CLLC or CLLLC system capable of bidirectional operation, may be a current resonant type DC/DC converter of another system, may be a voltage current type DC/DC converter not having the resonance circuit 21b, or may be a DC/DC converter of a phase shift system, a dual active bridge (DAB) system, or the like. In addition, the pulse generation unit 27b of the first and second embodiments may output a switching pulse for PWM control or phase shift control instead of outputting a switching pulse for frequency modulation control. In addition, the DC/DC converter according to the present invention may be a non-isolated DC/DC converter that does not include the isolation transformer 21c.

In the control unit 22 of the first embodiment, for example, the output current detection unit 23a and the input voltage ripple extraction unit 24 may include an analog circuit, and the other units may include a digital circuit. In this case, the control unit 22 may perform A/D conversion processing on outputs of the output current detection unit 23a and the input voltage ripple extraction unit 24, read them by a digital circuit, perform software processing in the digital circuit, perform D/A conversion processing on the output of the pulse generation unit 27b, and output a switching pulse to the primary-side switching circuit 21a. The same applies to the second embodiment.

A power source device according to the present invention may include a plurality of DC/DC converters according to the present invention, or may include a plurality of power supply units including an AC/DC converter and a DC/DC converter according to the present invention.

### DESCRIPTION OF REFERENCE SIGNS

- 1, 1': Power source device
- 2: AC power supply
- 3: Storage battery
- 10: AC/DC converter
- 20, 20': DC/DC converter
- 21: Power unit
- 21a: Primary-side switching circuit (drive circuit)
- 21b: Resonance circuit
- 21c: Isolation transformer
- 21d: Secondary-side rectifier circuit
- 22, 22': Control unit
- 23: First control unit
- 23a: Output current detection unit
- 23b: Calculation unit
- 23c: PI control unit
- 24, 24': Input voltage ripple extraction unit
- 25, 25': Output current ripple extraction unit
- 26, 26': Second control unit
- 26a: Polarity determination unit
- 26b: First multiplier
- 26c: Calculation unit
- 26d: PI control unit
- 26e: Second multiplier
- 27: Switching control unit
- 27a: Calculation unit
- 27b: Pulse generation unit

## Claims

1. A DC/DC converter (20, 20') comprising:
a power unit (21) that includes a drive circuit (21a) including a switching element and a rectifier circuit (21d),
wherein the drive circuit (21a) is configured to convert an input voltage into an AC signal by switching the input voltage by the switching element, and wherein the rectifier circuit (21d) is configured to rectify the AC signal to obtain a DC output; and
a control unit (22, 22'), configured to control the drive circuit (21a), wherein
the control unit (22, 22') includes:
a first control unit (23) configured to generate a first control command value for bringing the output close to a target value;
an input voltage ripple extraction unit (24, 24') including a band pass filter and being configured to extract an AC component included in the input voltage as the input voltage ripple by removing a DC component from the input voltage;
an output ripple extraction unit (25, 25') configured to extract an output ripple included in the output;
a second control unit (26, 26') configured to calculate an output ripple with polarity by multiplying the output ripple included in the output by a value including polarity, which is a
positive or negative sign, of the input voltage ripple, wherein the second control unit (26, 26') is configured to generate a gain for bringing the output ripple with polarity close to a ripple target value, and wherein the second control unit (26, 26') is configured to generate a second control command value by multiplying the input voltage ripple by the gain; and
a switching control (27) unit configured to perform feedforward control of the drive circuit (21a) on a basis of the first control command value and the second control command value.

2. The DC/DC converter (20, 20') according to claim 1, wherein
the second control unit (26, 26') includes a polarity determination unit (26a) (26a), and
the polarity determination unit (26a) is configured to output a value of +1 when the input voltage ripple is positive and wherein the polarity determination unit (26a) is configured to output a value of -1 when the input voltage ripple is negative as the value including the polarity.

3. The DC/DC converter (20, 20') according to claim 1, wherein
the second control unit (26, 26') includes a gain-added polarity determination unit (26a), and
the gain-added polarity determination unit (26a) is configured to output the input voltage ripple subjected to gain adjustment as the value including the polarity.

4. The DC/DC converter (20, 20') according to claim 1, wherein
the second control unit (26, 26') includes:
a first multiplier (26b) configured to calculate the output ripple with polarity;
a calculation unit (26c) configured to calculate a difference between the output ripple with polarity and the ripple target value;
a PI control unit (26d) configured to generate the gain on a basis of the difference; and
a second multiplier (26e) configured to multiply the input voltage ripple by the gain.

5. The DC/DC converter (20, 20') according to claim 4, wherein
the PI control unit (26d) is configured to change a magnitude of a PI gain according to the input voltage.

6. The DC/DC converter (20, 20') according to claim 1, wherein
the output ripple extraction unit (25, 25') is configured to extract an output current ripple or an output voltage ripple as the output ripple included in the output.

7. The DC/DC converter (20, 20') according to claim 1, wherein
the input voltage ripple extraction unit (24, 24') is configured to extract input voltage ripples of an N number of frequencies (N is an integer equal to or more than 2),
the output ripple extraction unit (25, 25') is configured to extract output ripples included in the output of the N number of frequencies,
the second control unit (26, 26') is configured to generate the N number of the second control command values on a basis of the input voltage ripples of the N number of frequencies and the output ripples included in the output of the N number of frequencies, and
the switching control (27) unit is configured to perform feedforward control on the drive circuit (21a) on a basis of the first control command value and the N number of the second control command values.

8. A power source device (1, 1') comprising:
an AC/DC (10) converter; and
the DC/DC converter (20, 20') according to claim 1 connected to a DC end of the AC/DC (10) converter.

9. The power source device (1, 1') according to claim 8, wherein the power source device (1, 1') is configured to change an output voltage of the AC/DC (10) converter according to an output voltage of the DC/DC converter (20, 20').

## Patentansprüche

1. DC/DC-Wandler (20, 20'), umfassend:
eine Leistungseinheit (21), die eine Ansteuerschaltung (21a) mit einem Schaltelement und eine Gleichrichterschaltung (21d) umfasst, wobei die Ansteuerschaltung (21a) so konfiguriert ist, dass sie eine Eingangsspannung durch Schalten der Eingangsspannung mittels des Schaltelements in ein AC-Signal (Wechselstromsignal) umwandelt, und wobei die Gleichrichterschaltung (21d) so konfiguriert ist, dass sie das AC-Signal gleichrichtet, um einen DC-Ausgang (Gleichstromausgang) zu erhalten; und
eine Steuereinheit (22, 22'), die so konfiguriert ist, dass sie die Ansteuerschaltung (21a) steuert, wobei die Steuereinheit (22, 22') umfasst:
eine erste Steuereinheit (23), die so konfiguriert ist, dass sie einen ersten Steuerbefehlswert erzeugt, um den Ausgang nahe an einen Sollwert zu bringen;
eine Eingangsspannungswelligkeits-Extraktionseinheit (24, 24'), die ein Bandpassfilter umfasst und so konfiguriert ist, dass sie eine in der Eingangsspannung enthaltene AC-Komponente als Eingangsspannungswelligkeit extrahiert, indem sie eine DC-Komponente aus der Eingangsspannung entfernt;
eine Ausgangswelligkeits-Extraktionseinheit (25, 25'), die so konfiguriert ist, dass sie eine im Ausgang enthaltene Ausgangswelligkeit extrahiert;
eine zweite Steuereinheit (26, 26'), die so konfiguriert ist, dass sie eine Ausgangswelligkeit mit Polarität berechnet, indem sie die im Ausgang enthaltene Ausgangswelligkeit mit einem Wert mit Polarität, der ein positives oder negatives Vorzeichen ist, der Eingangsspannungswelligkeit multipliziert, wobei die zweite Steuereinheit (26, 26') so konfiguriert ist, dass sie eine Verstärkung erzeugt, um die Ausgangswelligkeit mit Polarität nahe an einen Welligkeits-Sollwert zu bringen, und wobei die zweite Steuereinheit (26, 26') so konfiguriert ist, dass sie einen zweiten Steuerbefehlswert erzeugt, indem sie die Eingangsspannungswelligkeit mit der Verstärkung multipliziert; und
eine Schaltsteuereinheit (27), die so konfiguriert ist, dass sie auf der Grundlage des ersten Steuerbefehlswerts und des zweiten Steuerbefehlswerts eine Feedforward-Steuerung der Ansteuerschaltung (21a) durchführt.

2. DC/DC-Wandler (20, 20') gemäß Anspruch 1, wobei
die zweite Steuereinheit (26, 26') eine Polaritätsbestimmungseinheit (26a) (26a) umfasst, und
die Polaritätsbestimmungseinheit (26a) so konfiguriert ist, dass sie einen Wert von +1 ausgibt, wenn die Eingangsspannungswelligkeit positiv ist, und wobei die Polaritätsbestimmungseinheit (26a) so konfiguriert ist, dass sie einen Wert von -1 ausgibt, wenn die Eingangsspannungswelligkeit negativ ist, als der Wert mit der Polarität.

3. DC/DC-Wandler (20, 20') gemäß Anspruch 1, wobei
die zweite Steuereinheit (26, 26') eine Bestimmungseinheit (26a) der Polarität mit Verstärkung umfasst, und
die Bestimmungseinheit (26a) der Polarität mit Verstärkung so konfiguriert ist, dass sie die einer Verstärkungsanpassung unterzogene Eingangsspannungswelligkeit als den Wert mit der Polarität ausgibt.

4. DC/DC-Wandler (20, 20') gemäß Anspruch 1, wobei
die zweite Steuereinheit (26, 26') umfasst:
einen ersten Multiplizierer (26b), der so konfiguriert ist, dass er die Ausgangswelligkeit mit Polarität berechnet;
eine Berechnungseinheit (26c), die so konfiguriert ist, dass sie eine Differenz zwischen der Ausgangswelligkeit mit Polarität und dem Welligkeits-Sollwert berechnet;
eine PI-Regeleinheit (26d), die so konfiguriert ist, dass sie auf der Grundlage der Differenz die Verstärkung erzeugt; und
einen zweiten Multiplizierer (26e), der so konfiguriert ist, dass er die Eingangsspannungswelligkeit mit der Verstärkung multipliziert.

5. DC/DC-Wandler (20, 20') gemäß Anspruch 4, wobei
die PI-Regeleinheit (26d) so konfiguriert ist, dass sie die Größe einer PI-Verstärkung entsprechend der Eingangsspannung ändert.

6. DC/DC-Wandler (20, 20') gemäß Anspruch 1, wobei
die Ausgangswelligkeits-Extraktionseinheit (25, 25') so konfiguriert ist, dass sie eine Ausgangsstromwelligkeit oder eine Ausgangsspannungswelligkeit als die im Ausgang enthaltene Ausgangswelligkeit extrahiert.

7. DC/DC-Wandler (20, 20') gemäß Anspruch 1, wobei
die Eingangsspannungswelligkeits-Extraktionseinheit (24, 24') so konfiguriert ist, dass sie die Eingangsspannungswelligkeiten einer Anzahl N von Frequenzen extrahiert (N ist eine ganze Zahl größer oder gleich 2),
die Ausgangswelligkeits-Extraktionseinheit (25, 25') so konfiguriert ist, dass sie die im Ausgang enthaltenen Ausgangswelligkeiten der N Frequenzen extrahiert,
die zweite Steuereinheit (26, 26') so konfiguriert ist, dass sie die N zweiten Steuerbefehlswerte auf der Grundlage der Eingangsspannungswelligkeiten der N Frequenzen und der im Ausgang enthaltenen Ausgangswelligkeiten der N Frequenzen erzeugt, und
die Schaltsteuereinheit (27) so konfiguriert ist, dass sie auf der Grundlage des ersten Steuerbefehlswerts und der N zweiten Steuerbefehlswerte eine Feedforward-Steuerung der Ansteuerschaltung (21a) durchführt.

8. Stromversorgungsvorrichtung (1, 1'), umfassend:
einen AC/DC-Wandler (10); und
den DC/DC-Wandler (20, 20') gemäß Anspruch 1, der mit einem DC-Ende des AC/DC-Wandlers (10) verbunden ist.

9. Stromversorgungsvorrichtung (1, 1') gemäß Anspruch 8, wobei die Stromversorgungsvorrichtung (1, 1') so konfiguriert ist, dass sie eine Ausgangsspannung des AC/DC-Wandlers (10) entsprechend einer Ausgangsspannung des DC/DC-Wandlers (20, 20') ändert.

## Revendications

1. Convertisseur CC/CC (20, 20') comprenant :
un bloc d'alimentation (21) qui comporte un circuit d'attaque (21a) comportant un élément de commutation et un circuit redresseur (21d),
dans lequel le circuit d'attaque (21a) est conçu pour convertir une tension d'entrée en un signal CA en commutant la tension d'entrée par l'élément de commutation, et
dans lequel le circuit redresseur (21d) est conçu pour redresser le signal CA pour obtenir une sortie CC ; et
une unité de commande (22, 22'), conçue pour commander le circuit d'attaque (21a), dans lequel l'unité de commande (22, 22') comporte :
une première unité de commande (23) conçue pour générer une première valeur de commande de contrôle pour rapprocher la sortie d'une valeur cible ;
une unité d'extraction d'ondulations de tension d'entrée (24, 24') comportant un filtre passe-bande et étant conçue pour extraire une composante CA incluse dans la tension d'entrée en tant qu'ondulation de tension d'entrée en supprimant une composante CC de la tension d'entrée ;
une unité d'extraction d'ondulations de sortie (25, 25') conçue pour extraire une ondulation de sortie incluse dans la sortie ;
une seconde unité de commande (26, 26') conçue pour calculer une ondulation de sortie avec polarité en multipliant l'ondulation de sortie incluse dans la sortie par une valeur incluant la polarité, qui est un signe positif ou négatif, de l'ondulation de tension d'entrée, dans lequel la seconde unité de commande (26, 26') est conçue pour générer un gain pour rapprocher l'ondulation de sortie avec polarité d'une valeur cible d'ondulation, et dans lequel la seconde unité de commande (26, 26') est conçue pour générer une seconde valeur de commande de contrôle en multipliant l'ondulation de tension d'entrée par le gain ; et
une unité de commande de commutation (27) conçue pour effectuer une commande de précompensation du circuit d'attaque (21a) sur la base de la première valeur de commande de contrôle et de la seconde valeur de commande de contrôle.

2. Convertisseur CC/CC (20, 20') selon la revendication 1, dans lequel
la seconde unité de commande (26, 26') comporte une unité de détermination de polarité (26a) (26a), et
l'unité de détermination de polarité (26a) est conçue pour délivrer une valeur de +1 lorsque l'ondulation de tension d'entrée est positive et l'unité de détermination de polarité (26a) est conçue pour délivrer une valeur de -1 lorsque l'ondulation de tension d'entrée est négative en tant que valeur incluant la polarité.

3. Convertisseur CC/CC (20, 20') selon la revendication 1, dans lequel
la seconde unité de commande (26, 26') comporte une unité de détermination de polarité à gain ajouté (26a), et
l'unité de détermination de polarité à gain ajouté (26a) est conçue pour délivrer l'ondulation de tension d'entrée soumise à un ajustement de gain en tant que valeur incluant la polarité.

4. Convertisseur CC/CC (20, 20') selon la revendication 1, dans lequel
la seconde unité de commande (26, 26') comporte :
un premier multiplicateur (26b) conçu pour calculer l'ondulation de sortie avec polarité ;
une unité de calcul (26c) conçue pour calculer une différence entre l'ondulation de sortie avec polarité et la valeur cible d'ondulation ;
une unité de commande PI (26d) conçue pour générer le gain sur la base de la différence ; et
un second multiplicateur (26e) conçu pour multiplier l'ondulation de tension d'entrée par le gain.

5. Convertisseur CC/CC (20, 20') selon la revendication 4, dans lequel
l'unité de commande PI (26d) est conçue pour modifier une amplitude d'un gain PI en fonction de la tension d'entrée.

6. Convertisseur CC/CC (20, 20') selon la revendication 1, dans lequel
l'unité d'extraction d'ondulations de sortie (25, 25') est conçue pour extraire une ondulation de courant de sortie ou une ondulation de tension de sortie en tant qu'ondulation de sortie incluse dans la sortie.

7. Convertisseur CC/CC (20, 20') selon la revendication 1, dans lequel
l'unité d'extraction d'ondulations de tension d'entrée (24, 24') est conçue pour extraire des ondulations de tension d'entrée d'un nombre N de fréquences (N est un nombre entier égal ou supérieur à 2),
l'unité d'extraction d'ondulations de sortie (25, 25') est conçue pour extraire des ondulations de sortie incluses dans la sortie du nombre N de fréquences,
la seconde unité de commande (26, 26') est conçue pour générer le nombre N des secondes valeurs de commande de contrôle sur la base des ondulations de tension d'entrée du nombre N de fréquences et des ondulations de sortie incluses dans la sortie du nombre N de fréquences, et
l'unité de commande de commutation (27) est conçue pour effectuer une commande de précompensation sur le circuit d'attaque (21a) sur la base de la première valeur de commande de contrôle et du nombre N des secondes valeurs de commande de contrôle.

8. Dispositif de source d'alimentation (1, 1') comprenant :
un convertisseur CA/CC (10) ; et
le convertisseur CC/CC (20, 20') selon la revendication 1 connecté à une extrémité CC du convertisseur CA/CC (10).

9. Dispositif de source d'alimentation (1, 1') selon la revendication 8, dans lequel le dispositif de source d'alimentation (1, 1') est conçu pour modifier une tension de sortie du convertisseur CA/CC (10) en fonction d'une tension de sortie du convertisseur CC/CC (20, 20').
